# EUROPEAN PATENT APPLICATION

(11) **EP 1 030 467 A1**
(43) Date of publication of application: **23.08.2000**
(21) Application number: 99301212.9
(22) Date of filing: 18.02.1999
(51) Int. Cl.: H04B 7/185

(54) **Satellite communication system with beam forming elements and frequency hopping data transmitted to the user**

(71) Applicant: ICO Services Ltd., London W6 9BN (GB)
(72) Inventor: Wyrwas, Richard, Southgate, London N14 6LN (GB); Crayson, Mark, London W4 2QT (GB)
(74) Representative: Musker, David Charles

(57) **Abstract**

A satellite communications system comprising at least one satellite (4) in orbit about the Earth, the at least one satellite (4) having a plurality of beam forming elements arranged to project a plurality of beams onto the surface of the Earth, the beam forming elements associated with each beam being arranged to receive a user uplink signal from one or more user terminals (2) adjacent the Earth in one of a set of distinct frequency ranges, the system further comprising means for transmitting frequency hopping data to one or more user terminals, the uplink signal of the one or more user terminals (2) being arranged to frequency hop in dependence upon the received frequency hopping data, characterised in that the frequency hopping data comprises a varying sequence of frequency ranges of the set of distinct frequency ranges.

## Description

### FIELD OF THE INVENTION

This invention relates to communications with a mobile user, and particularly (but not exclusively) to such communications in which the link to the mobile user is via a satellite or satellites.

Terrestrial cellular communication systems are well known in the art and a number of standards, such as the GSM standard and the PCN standard exist which define different signalling protocols for them. Details of these standards are given for example in "Mobile Radio Technology" by Gordon White, Butterworth Heinemann, 1994. The GSM and PCN systems are digital communication systems and allow paging and data communications in addition to voice communications.

Mobile satellite communication systems have also been proposed in which radio frequency links are provided by a constellation of satellites. These satellite communication systems provide much greater coverage than terrestrial cellular systems. One example of such a system is the ICO™ system, aspects of which are described in patent publications WO 95/28747, WO 96/03814 and GB 2,295,296A. Other examples include the Iridium™ satellite cellular system, described for example in EP-A-0365885, and the Odyssey™ mobile communication system described for example in EP-A-0510789, EP-A-0575678 and EP-A-0648027.

An alternative proposed satellite cellular system is described in EP 0536921 and EP 0506255.

Because of the altitude of the satellites, the distance travelled by a signal from the user terminal to the satellite, and from the satellite to the Earth station, is much longer than the distance between a terrestrial user terminal and its local based station. According, the attenuation undergone by the signal is substantially higher.

In the user terminal uplink direction, the power available from some types of terminal (such as handsets) is very limited, and the gain of the antennas may be very low. As the satellite has somewhat higher power, the signal strength on the user downlink is somewhat larger. In the feeder link between the Earth station and the satellite, more power and higher gain antennas are available. Accordingly, the user terminal uplink is, in many cases, the link on which the signal is most susceptible to noise.

In addition to the thermal noise radiated by the planet on which the terminals are located, each user terminal may interfere with transmissions from others (despite nominally occupying a different time or frequency channel) due to errors or spreading in time and frequency.

Furthermore, although radio frequency usage is regulated, the fact that satellite systems cover the whole or a substantial part of the world makes it likely that in at least some areas, the frequencies used on the user link will also be used by terrestrial transmitters, which are therefore, from the point of view of the satellite system, interference generators.

Such interferers may be of several different types, and may be broad band or narrow band; random or repetitive; high power or low power and so on.

EP 0519021 discloses a method of reducing interference between terrestrial and satellite communications systems by controlling the power levels in the terrestrial system.

WO 96/031016 discloses a method of preventing interference between two satellite systems by predicting the zone where interference will occur and inhibiting transmission into that zone by one of the systems.

An object of the present invention is to reduce the effects of interference, particularly in the user terminal uplink direction of a satellite communication system.

The present invention provides a satellite communications system comprising at least one satellite in orbit about the Earth, the at least one satellite having a plurality of beam forming elements arranged to project a plurality of beams onto the surface of the Earth, the beam forming elements associated with each beam being arranged to receive a user uplink signal from one or more user terminals adjacent the Earth in one of a set of distinct frequency ranges, the system further comprising means for transmitting frequency hopping data to one or more user terminals, the uplink signal of the one or more user terminals being arranged to frequency hop in dependence upon the received frequency hopping data, characterised in that the frequency hopping data comprises a varying sequence of frequency ranges of the set of distinct frequency ranges.

Preferably, two or more satellites are used, which may be in non-geostationary orbits, for example in a global coverage constellation or a satellite cluster.

Other aspects and preferred embodiments of the invention are as described or claimed hereafter, with advantages which will be apparent from the following.

### BRIEF DESCRIPTION OF THE DRAWINGS

Embodiments of the invention will now be described, by way of example only, with reference to the accompanying drawings, in which:
Figure 1 is a block diagram showing schematically the elements of a first communications system embodying the present invention;
Figure 2a is an illustrative is a block diagram showing schematically the elements of mobile terminal equipment suitable for use with the present invention; and
Figure 2b is a corresponding block diagram;
Figure 3 is a block diagram showing schematically the elements of an Earth station node forming part of the embodiment of Figure 1;
Figure 4 illustrates schematically the beams produced by a satellite in the embodiment of Figure 1;
Figure 5 illustrates schematically the disposition of satellites forming part of Figure 1 in orbits around the Earth;
Figure 6 is a diagram illustrating schematically the geometry of some interference sources;
Figure 7 is a diagram showing schematically the spectral distribution of frequency carriers on a user downlink beam;
Figure 8 is a diagram showing schematically the structure of a TDMA frame on one of the carriers of Figure 6;
Figure 9 is a diagram showing a beam frequency reuse pattern of a satellite according to the first embodiment;
Figures 10a-d illustrate the four steps of the hopping sequence of the satellite beam frequency reuse pattern illustrated in Figure 9;
Figure 11 is a diagram illustrating the satellites in one orbital plane in the fourth embodiment;
Figure 12 schematically illustrates the allocation of frequency blocks to the satellites in the fourth embodiment.

### GENERAL ASPECTS OF EMBODIMENTS

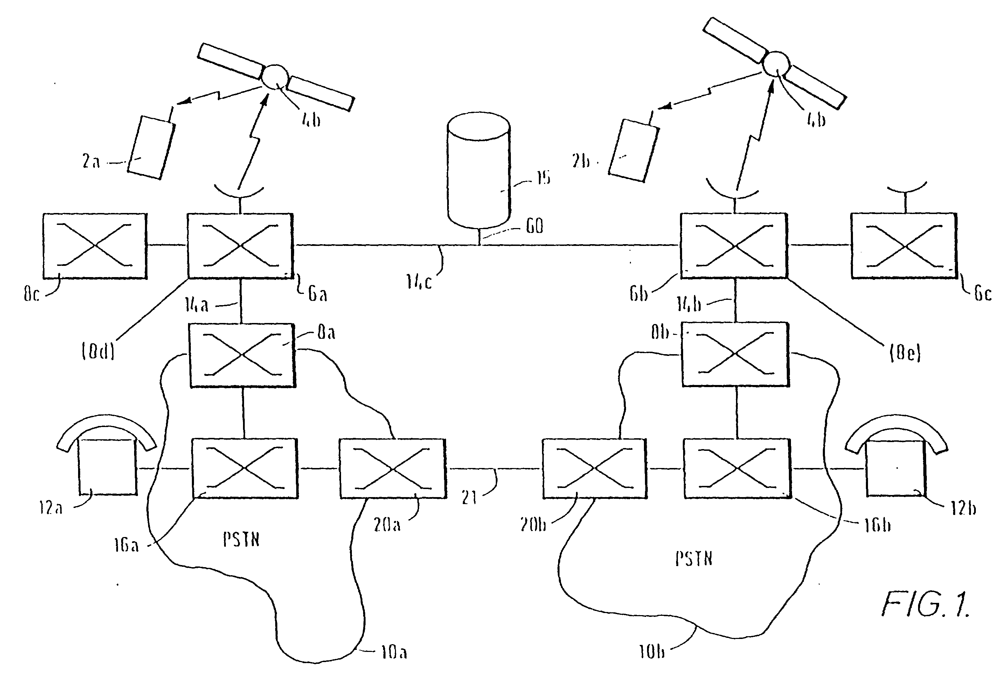

Referring to Figure 1, a satellite communications network according to this embodiment comprises mobile user terminal equipment 2a, 2b (e.g. handsets 2a and 2b); orbiting relay satellites 4a, 4b; satellite Earth station nodes 6a, 6b; satellite system gateway stations 8a, 8b; terrestrial (e.g. public switched) telecommunications networks 10a, 10b; and fixed telecommunications terminal equipment 12a, 12b.

Interconnecting the satellite system gateways 8a, 8b with the Earth station nodes 6a, 6b, and interconnecting the nodes 6a, 6b with each other, is a dedicated ground-based network comprising channels 14a, 14b, 14c. The satellites 4, Earth station nodes 6 and lines 14 make up the infrastructure of the satellite communications network, for communication with the mobile terminals 2, and accessible through the gateway stations 8.

A terminal location database station 15 (equivalent to a GSM HLR) is connected, via a signalling link 60 (e.g. within the channels 14 of the dedicated network) to the gateway station and Earth stations 6.

The PSTNs 10a, 10b comprise, typically, local exchanges 16a, 16b to which the fixed terminal equipment 12a, 12b is connected via local loops 18a, 18b; and international switching centres 20a, 20b connectable one to another via transitional links 21 (for example, satellite links or subsea optical fibre cable links). The PSTNs 10a, 10b and fixed terminal equipment 12a, 12b (e.g. telephone instruments) are well known and almost universally available today.

For voice communications, each mobile terminal apparatus is in communication with a satellite 4 via a full duplex channel (in this embodiment) comprising a downlink channel and an uplink channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is handover from one satellite 4 to another.

### Terminal 2

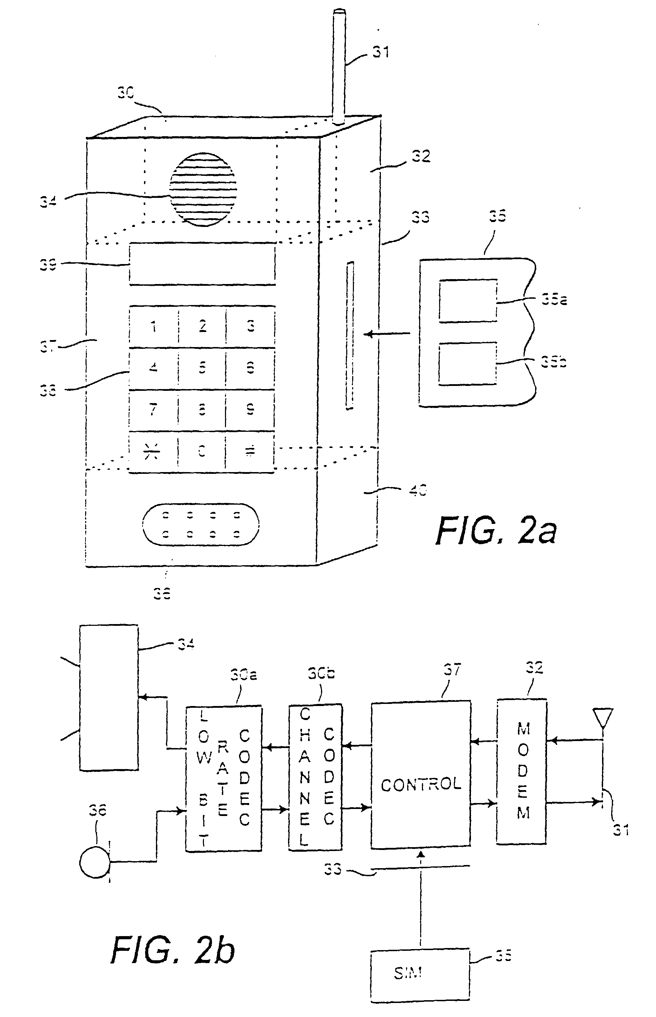

Referring to Figures 2a and 2b, a user terminal equipment 2a of Figure 1 is shown.

The terminals 2a, 2b may be similar to those presently available for use with the GSM system, comprising a digital low rate coder/decoder 30, together with conventional microphone 36, loudspeaker 34, battery 40 and keypad components 38, and a radio frequency (RF) interface 32 and antenna 31 suitable for satellite communications. A display 39 (for example a liquid crystal display) and a 'smart card' reader 33 receiving a smart card (subscriber identity module or SIM) 35 storing user information are also provided.

Specifically, the SIM 35 includes a processor 35a and permanent memory 35b.

Also provided is a terminal control circuit 37 (which may in practice be integrated with the coder 30) consisting of a suitably programmed microprocessor, microcontroller or digital signal processor (DSP) chip.

The control circuit 37 performs various functions including framing speech and data into TDMA time frames for transmission (and likewise demultiplexing received TDMA frames); and performing encryption or enciphering.

The coder/decoder (codec) 30 in this embodiment comprises a low bit rate coder 30a, generating a speech bit stream at around 3.6 kilobits per second, together with a channel coder 30b applying error correcting encoding, to generate an encoded bit stream at a rate of 4.8 kilobits per second.

The SIM memory 35b stores various subscriber identity data including the international mobile subscriber identity (IMSI), which is a unique number associated with that SIM (and hence the subscriber to whom it belongs).

### Earth Station Node 6

The Earth station nodes 6 are arranged for communication with the satellites.

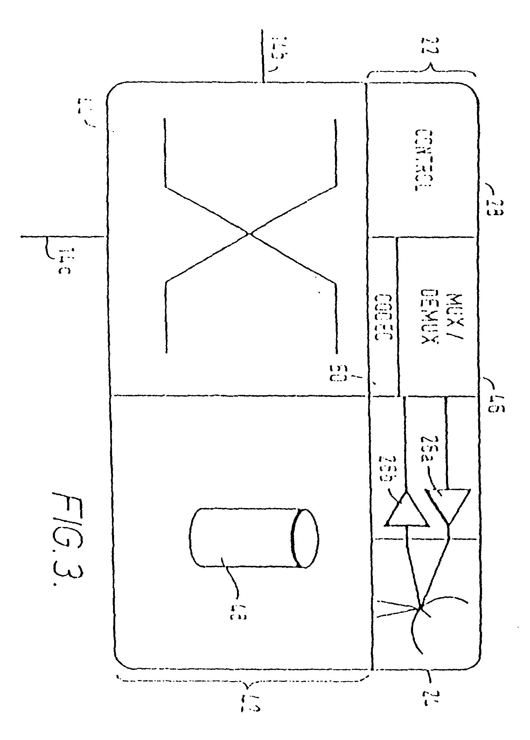

Each Earth station node 6 comprises, as shown in Figure 3, a conventional satellite Earth station 22 (functioning somewhat equivalently to the Base Station of a cellular system) consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemera data, controlling the steering of the antenna 24, and effecting any control of the satellite 4 that may be required (by signalling via the antenna 24 to the satellite 4).

The Earth station node 6 further comprises a mobile satellite switching centre 42 comprising a network switch 44 connected to the trunk links 14 forming part of the dedicated network. It may be, for example, a commercially available mobile switch centre (MSC) of the type used in digital mobile cellular radio systems such as GSM systems. A multiplexer 46 is arranged to receive switched calls from the switch 44 and multiplex them into a composite signal for supply to the amplifier 26 via a low bit-rate voice codec 50. Finally, the Earth station node 6 comprises a local store 48 storing details of each mobile terminal equipment 2a within the area served by the satellite 4 with which the node 6 is in communication. The local store 48 acts to fulfil the functions of a visited location register (VLR) of a GSM system, and may be based on commercially available GSM products. Alternatively, satellite control may be a separate control station.

The gateway stations 8a, 8b comprise, in this embodiment, commercially available mobile switch centres (MSCs) of the type used in digital mobile cellular radio systems such as GSM systems. They could alternatively comprise a part of an international or other exchange forming one of the PSTNs 10a, 10b operating under software control to interconnect the networks 10 with the satellite system trunk lines 14.

The gateway stations 8 comprise a switch arranged to interconnect incoming PSTN lines from the PSTN 10 with dedicated service lines 14 connected to one or more Earth station nodes 6.

Also provided in the gateway stations 8 is a store for billing, service and other information relating to those mobile terminals 2 for which the gateway station 8 is the home gateway station.

The database station 15 comprises a digital data store which contains, for every subscriber terminal apparatus 2, a record showing the identity (e.g. the International Mobile Subscriber Identity or IMSI); the service provider station 8 with which the apparatus is registered (to enable billing and other data to be collected at a single point) and the currently active Earth station node 6 with which the apparatus 2 is in communication via the satellite 4.

Thus, in this embodiment the database station 15 acts to fulfil the functions of a home location register (HLR) of a GSM system, and may be based on commercially available GSM products.

Periodically, the Earth station nodes measure the delay and Doppler shift of communications from the terminals 2 and transmit these to the database station 15, which calculates the rough terrestrial position of the mobile terminal apparatus 2 using the differential arrival times and/or Doppler shifts in the received signal, and knowledge of which beams of which satellites 4 the signal was received through. The position is then stored in the database 48.

### Satellites 4

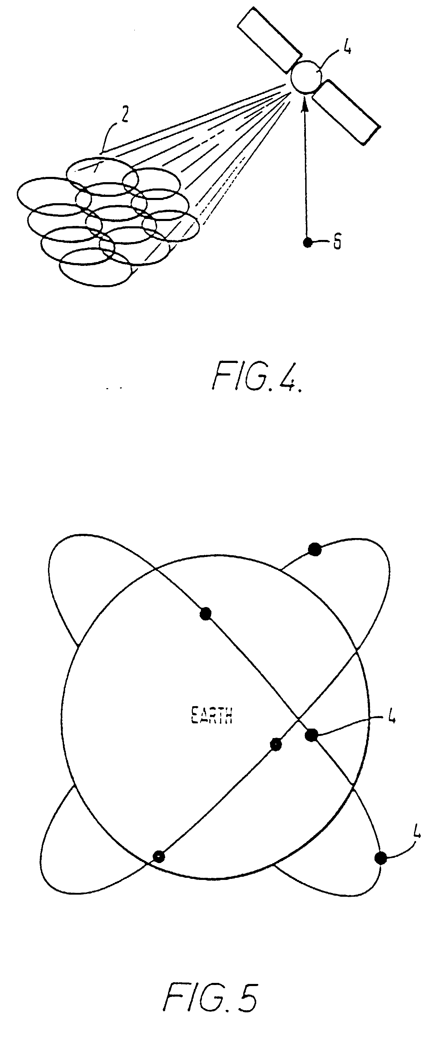

The satellites 4a, 4b comprise generally conventional communications satellites such as the HS601 available from Hughes Aerospace Corp, California, US with a communications payload, and may be as disclosed in GB 2288913. Each satellite 4 is arranged to generate an array (typically hexagonal) of beams covering a footprint beneath the satellite, each beam including a number of different frequency channels and time slots, as described in GB 2293725 and illustrated in Figure 4.

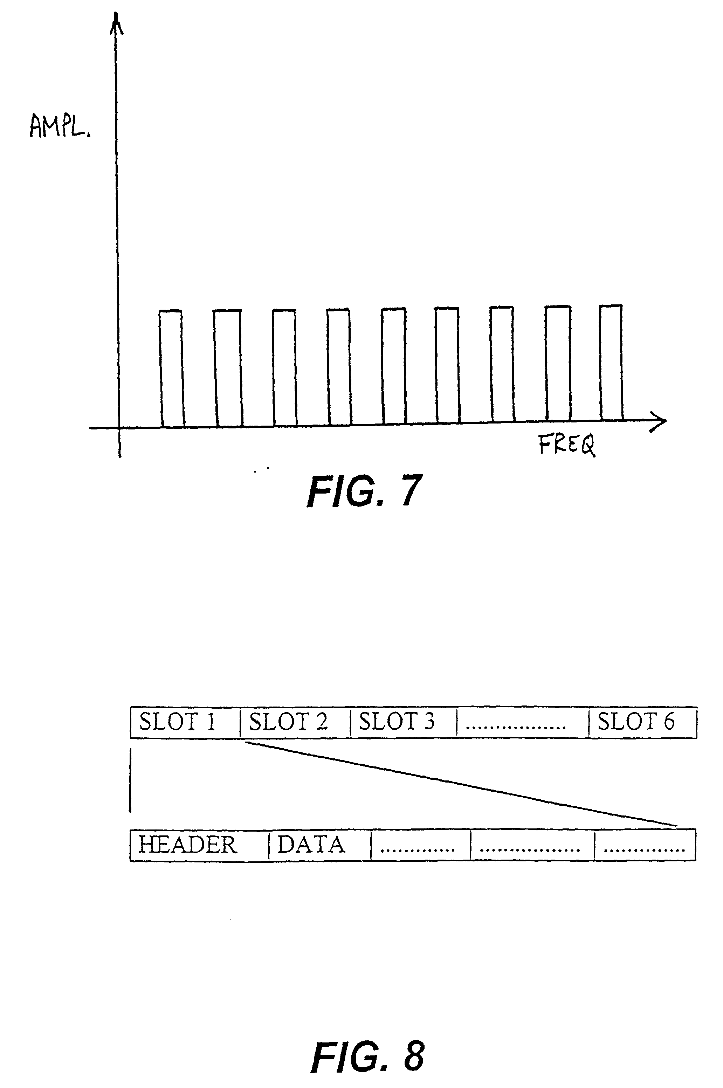

On each beam, the satellite transmits a set of user downlink frequencies as shown in Figure 7. The frequencies are separated by a frequency guard band. The downlink frequencies on adjacent beams are different, so as to permit frequency re-use between beams. Each beam therefore acts somewhat in the manner of a cell of a conventional terrestrial cellular system. For example, there may be 61, 121 or 163 beams. The frequencies are allocated between satellites such that within each plane, neighbouring satellites use different frequencies at those of their beams which overlap and satellites from one plane use different frequencies than those used by satellites of the other plane.

Similarly, each satellite is arranged to receive radiation in an array of beams, which in this embodiment cover the same footprints beneath the satellites, to provide a plurality of user uplink beams each carrying different frequencies.

In this embodiment, referring to Figure 8, each uplink and downlink frequency carries a plurality (e.g. 6) of time division channels, so that each mobile terminal 2 communicates on a channel comprising a given time slot in a given uplink and downlink frequency. The time slots are separated by a short guard interval.

Within each beam there is also provided a downlink common broadcast control channel (equivalent to the broadcast common control channel or BCCH of the GSM system) which occupies at least one of the frequencies for each beam; the frequencies used by the broadcast control channels of the beams are stored within each mobile terminal 2 which is arranged to scan these frequencies.

The satellites of this embodiment function as repeaters. Each satellite acts as a "bent pipe", amplifying and relaying signals from the user terminals 2 on the user terminal uplink, to the Earth station nodes 4 on a feeder downlink. Also (although it is not germane to this invention) signals from the Earth stations 4 on a feeder uplink are relayed down to the user terminals 2 on a user downlink.

Every frequency/channel in the user uplink therefore has an equivalent channel in the feeder downlink, and the satellite payload operates in accordance with a predetermined routing table, to translate a user link frequency from one of the user uplink beams (e.g. at around 2 GHz) to an equivalent frequency channel in the feeder downlink (e.g. at 5 or 7 GHz). The satellite performs amplification of the user uplink signal, in this embodiment at an intermediate frequency. The user uplink signals are not, however, digitally decoded and then remodulated. Thus, RF information such as delay and Doppler shift is preserved in the feeder downlink signal reaching the Earth station node 6.

The satellites 4a are arranged in a constellation in sufficient numbers and suitable orbits to cover a substantial area of the globe (preferably to give global coverage).

For example 10 (or more) satellites may be provided in two mutually orthogonal intermediate circular orbits (or more) at an altitude of, for example, about 10,500 kilometres (6 hour orbits) and equatorial inclinations of 45°, as shown in Figure 5. Equally, however, larger numbers of lower satellites may be used, as disclosed in EP 0365885, or other publications relating to the Iridium system, for example.

### FIRST EMBODIMENT

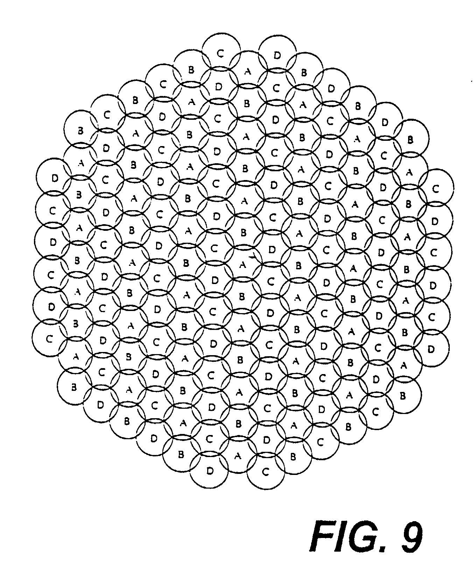

In the present embodiment, each satellite is arranged to project a hexagonal array of beams onto the surface of the earth, employing a four frequency re-use system. That is to say that adjacent beams in the hexagonal array use differing downlink frequencies in order to avoid mutual interference. However, the downlink frequency used in any given beam is also used in beams which are two beams distant from that beam in any given direction. Therefore, four carrier frequencies are used in total in respect of one satellite. This is illustrated in Figure 9 where the letters A-D denote the different carrier frequencies employed by the satellite.

As has been stated, in each beam a set of user downlink frequencies are modulated onto the beam carrier frequency. The user downlink frequencies are separate by guard bands as is shown in Figure 7. In this embodiment, the number of user downlink frequencies per carrier frequency is 9, each of which carries six time divided channels.

For each user downlink frequency, the corresponding user terminal uplink frequency is related by a constant frequency offset.

In the present embodiment, the uplink and the downlink signals between the user terminal and the satellite are arranged to frequency hop, as will be described more fully below, across the range of carrier frequencies employed by the satellite. In this instance, as a four frequency re-use system is used, any hopping sequence will employ up to four steps.

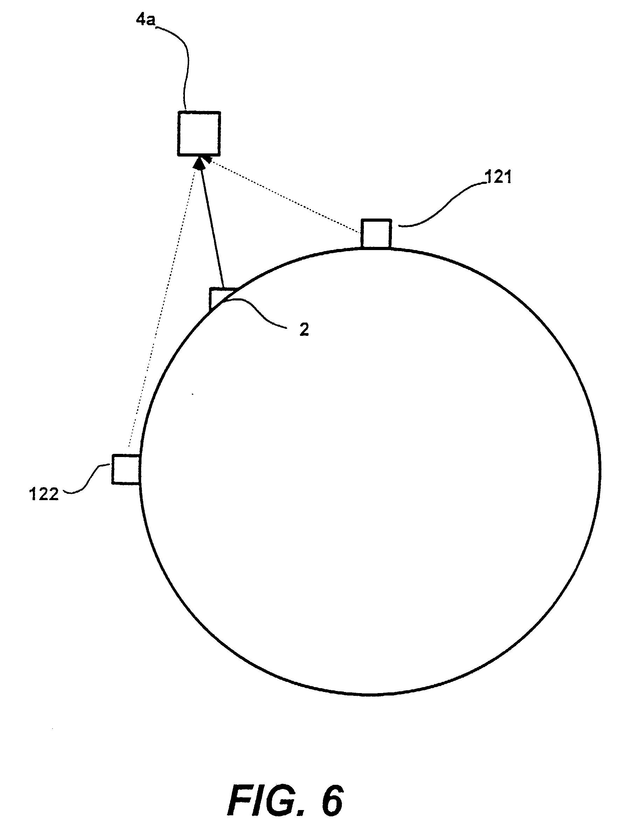

The benefit of frequency hopping in this manner will now be explained. In the present embodiment, transmissions both on the uplink and the downlink are made in a series of discrete pulses known as bursts. If each consecutive burst of a transmission is transmitted on the same frequency, then any frequency related transmission problem may affect the entire transmission, which may as a consequence be completely lost. This may arise, for example, due to the effect of a co-channel interferer 121 shown in Figure 6. Additionally, reflective surfaces in the transmission path, such as buildings, may cause the signal to be weakened due to destructive interference between the resulting signal paths.

However, by transmitting the signal bursts on frequencies which vary with time, it is ensured that an interfering signal will only interfere with those bursts made at its transmission frequency. Furthermore, as the wavelength of the signal varies with frequency, the effect of multipath interference for bursts made on different frequencies will vary, ensuring that only a proportion of the signal will be adversely affected. Indeed, the greater the frequency variation between hops, the greater will be the independent behaviour with regard to multipath fading and interference between the transmission bursts.

### Method of Operation

Referring to Figure 3, in this embodiment, control unit 28 of the Earth station node 6 stores the carrier frequencies with which each beam of a satellite 4 is operating. As explained above, the relationship between the downlink frequencies and the carrier frequencies ensures that the same downlink frequencies are re-used on only every second beam in a given direction.

The control unit 28 stores a number of varying beam frequency patterns, each of which preserves the four frequency re-use system. By combining these re-use patterns in a predetermined order a frequency hoping sequence for each of the satellite beams is defined.

The control unit 28 sends a control signal via the earth node antenna 24 to the satellite 4 defining the predetermining downlink hopping sequence which is to be used, together with the hopping intervals. By ensuring that each of the beams of the satellite 4 hops in unison, no transitional inference arises due to the frequency re-use pattern not being preserved.

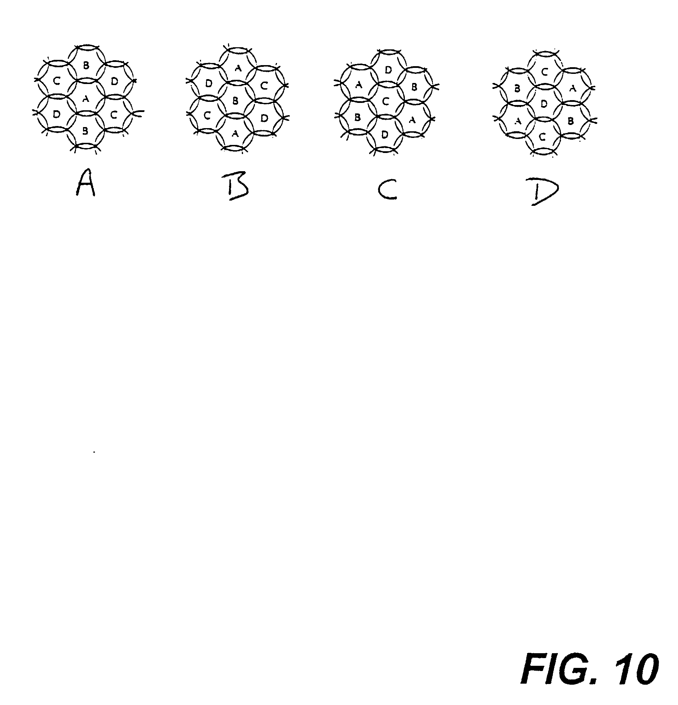

Figures 10a-d illustrate (for the seven central beams only) the four steps of the hopping sequence of the satellite footprint illustrated in Figure 9. In this embodiment this sequence is arranged to cycle repetitively, although the skilled reader will understand that a random hopping sequence which preserves the frequency re-use pattern may also be implemented.

The downlink common broadcast control channel transmits the identity of the selected hopping sequence together with the current step in the hopping sequence to the user terminals 2 located in the beam footprint. The control circuit 37 of user terminal 2 then controls the user terminal radio frequency interface 32 to match the receive frequency of the user terminal 2 to the frequencies defined in the selected hopping sequence, which is stored in the permanent memory of SIM 35b.

In this embodiment, each hopping step directly defines only the downlink carrier frequency of each beam. However, the user downlink frequencies, illustrated in Figure 7, also hop in synchronism with the downlink carrier frequency as they are modulated onto the carrier frequency at specified frequency offsets relative to the carrier frequency. Therefore, in this embodiment, the user downlink frequencies retain their frequency offsets relative to their respective downlink carrier frequency at all times.

Since the user terminal uplink frequency is also determined by a fixed offset from the received downlink frequency, it will also hop in synchronism with the downlink carrier frequency.

Therefore, in this embodiment, the benefit of frequency re-use is conserved, whilst taking advantages of reduced interference yielded through frequency diversity both on the uplink and the downlink.

In this embodiment, at each hopping step, the downlink common broadcast control channel for a given beam will change. However, as the user terminals are aware of the next downlink frequency in the hopping sequence, this is not an obstacle to continued communication. Furthermore, as the mobile terminals are arranged to scan the known broadcast frequencies on activation, in the manner used in cellular systems and well known to the skilled reader, this will not effect the normal signal acquisition procedure of a user terminal on activation.

It will be appreciate by the skilled reader that the system of the present embodiment may be varied so that only the uplink or the downlink frequencies are arranged to hop, or that both the uplink or downlink frequencies hop but not in dependence upon one another.

### SECOND EMBODIMENT

The second embodiment of the present invention fulfils in broad terms the same functions as that of the first embodiment. Therefore, similar features will not be described further.

The system of the second embodiment de-correlates the hopping sequences of the uplink and downlink frequencies between different beams having the same instantaneous downlink carrier frequency, as determined by the beam frequency reuse pattern of the first embodiment.

As the skilled reader will understand, frequency re-use causes a degree of interference between channels using the same frequency, despite being geographically separated in the beam frequency re-use pattern. The degree of interference depends upon the operational parameters of the system.

The relative interference ratio varies between calls and may be expressed as the signal level (the user uplink signal for example) divided by the interference level.

The signal level varies with user terminal position with respect to the satellite antenna. For example, when the user terminal is communicating with a satellite of low elevation angle, the gain of the satellite beam in question will be reduced since the beam is spread over a greater area (due to the curvature of the Earth). Additionally, as the elevation angle decreases, the likelihood of buildings or foliage, for example, obstructing the direct line of sight between the user terminal and the satellite increases. The position of the user terminal in relation to the beam footprint also effects the relative signal strength between the satellite and user terminal, since the gain of the satellite antenna decreases from its nadir to the periphery of the footprint.

The interference level varies, however, with the proximity and number of further user terminal uplink signals, transmitting on the same or similar frequencies. Clearly, in a frequency re-use situation, the separation distance between beams working on the same frequency will effect the level of system produced co-channel interference.

The capacity of the system is limited at the point when a predetermined proportion of calls suffer from an interference level that exceeds a predetermined limit. Therefore, the capacity of the system can be increased by minimising the statistical spread of signal interference.

In the first embodiment, the downlink carrier frequency of each beam, together with its associated uplink and downlink frequencies, was arranged to hop through each of the frequency bands of the frequency re-use system to derive advantages from frequency diversity. Therefore, the hopping sequence of each uplink and downlink frequency across the satellite footprint, sharing a common frequency carrier is synchronised.

However, in the second embodiment, despite the fact that the hopping sequences of carrier frequencies of the same frequency, according to the beam frequency re-use pattern, remains synchronised, their respective uplink and downlink frequencies are not, thus reducing the statistical spread interference between calls and hence increasing the capacity of the system.

### Mode of Operation

As has been described above with reference to Figure 8, each uplink and downlink frequency carries 6 time division channels, which are transmitted in cyclically repeated time slots 1 to 6. Also transmitted are various signalling information and data used by the system for various functions such as synchronisation. These are transmitted in further repeated slots.

In the present embodiment a cyclical frequency hopping program for downlink transmission is implemented within the frequency band of the associated carrier frequency of each beam. That is to say, the communications channels grouped in the 6 associated time division channels of each downlink transmission are arranged to hop through each of the downlink frequencies of that beam.

The grouped communications channels are arranged to frequency hop in dependence upon a control signal which governs the hopping profile of the associated beam. The control signal is generated by the control unit 28 of the Earth node antenna 24 and transmitted to each satellite 4 via the antenna 24.

The hopping profile for each group of communications channels is determined by two parameters, in a similar manner to the GSM system; the Mobile Allocation Index Offset (MAIO) and the Hopping Sequence Number (HSN).

The MAIO in the present embodiment, has as many values as there are downlink frequencies in a given beam of the satellite 4.

The HSN defines the hopping sequence which is to be followed for each group of communications channels. In this embodiment each HSN is a repeating sequence which uses each downlink frequency once only. However, in practice the HSNs could be randomly generated.

Within one beam, each channel group is arranged to have the same HSN and a different MAIO; i.e. each channel group hops through the same hopping sequence but at every step utilising a distinct downlink frequency (or frequency offset) from the remaining channel groups of the beam in question.

In beams using the same carrier frequency (according to the beam frequency re-use pattern) and consequently the same downlink frequencies, different HSNs are used. In this embodiment, the HSNs are devised so that they each have the same number of hopping steps and that on average each channel group of each beam will interfere with a given channel group of a further beam using the same downlink carrier frequency for 1/n th of the time (where n is the number of steps in the hopping cycle).

This ensures that the interfering effect of a given downlink frequency of one beam is approximately equally distributed among each channel group of a neighbouring beam using the same downlink carrier frequency; thus ensuring that no one channel of a given beam is subject to significantly more system produced interference than the others and so increasing the capacity of the system.

As has been described with respect to the first embodiment, the transmissions in the uplink direction are related to the corresponding downlink transmissions in terms of their frequency and hopping characteristics by a simple frequency offset. The HSN, step and synchronisation data are transmitted to the user terminal 2 via the downlink common broadcast control channel, together with the MAIO.

The user terminal radio frequency interface 32 is controlled by the control circuit 37 to receive to frequency hopping downlink signal as described with reference to the first embodiment. The user terminal 2 transmits uplink signals synchronised with the frequency hops dictated by the received HSN at an offset determined by the received MAIO.

Therefore, in any one beam, mutual interference between uplink or downlink signals is prevented as they frequency hop, by maintaining the MAIOs. Furthermore, interference between distant beam footprints which re-use the same frequencies, although not avoided totally, is no longer correlated between two given channels, which leads to the advantages described above.

Although the second embodiment is described as including the frequency hopping technique described in the first embodiment, in practice the technique described in the second embodiment could be implemented without that described in the first embodiment. It will be noted in this regard that the hopping program of this embodiment gives rise to frequency diversity advantages, as described in the first embodiment, in addition to the inteferer diversity advantages discussed above.

Furthermore, it will be realised that the technique of the present embodiment can instead, or additionally, be used to further increase the capacity of the system by arranging the hopping sequences to allocate less uplink and/or downlink frequencies to grouped channels than the number of steps in the hopping sequence.

### THIRD EMBODIMENT

The third embodiment of the present invention fulfils in broad terms the same functions as that of either of the first or second embodiments, and may be used in conjunction with either or both of these embodiments. Therefore, similar features will not be described further.

The system of the third embodiment is arranged to improve the signal quality of the uplink signal, by avoiding the interfering effect of a powerful interferer 121, broadcasting on a frequency which interferes with one of the uplink frequencies associated with one or more beams of a satellite 4.

### Mode of Operation

This is achieved by continually monitoring the interference level associated with each uplink frequency of each beam of a satellite 4, to determine whether the signal-to-interference ratio falls above or below a minimum threshold.

The value of uplink signal-to-interference ratio is calculated by measuring the bit error rate of the uplink signal using standard techniques known to the skilled reader. As the level of interference increases so will the bit error rate. Therefore, the bit error rate may be used as a good approximation to the relative levels of the signal and interference; i.e. the signal-to-interference ratio.

Alternatively, other suitable determinants of the signal-to-interference ratio may be used. For example, as the types of interference of concern, such as terrestrial television broadcasts, have a readily identifiable repeating format, they may be easily identified using auto-correlation techniques well known to the skilled reader. Similarly, the uplink signal format is known to the system. Therefore, the relative levels of the signal and interference may be determined using standard frequency spectrum analysis techniques.

In the event that uplink signal-to-interference ratio is found to have fallen below the specified threshold, the control unit 28 of the Earth node antenna 24 transmits a control signal to the satellite 4 in question to cease transmitting on the associated downlink frequency. In practice this is achieved by the control unit 28 generating a revised hopping sequence, adapted to exclude the downlink frequency corresponding to the degraded uplink frequency, and transmitting it to the satellite 4 as previously described.

It will be appreciated that the effectiveness of this method of interference avoidance depends upon the existence of unutilised capacity which may be used to carry the channels which would normally be carried on the excluded downlink frequency corresponding to the degraded uplink frequency. However, providing that unutilised capacity exists, the method of this embodiment may be used to avoid the effects of more than one interferer at any one time, on one or more satellites.

### FOURTH EMBODIMENT

The fourth embodiment is based on any of the preceding embodiments. However, whereas these embodiments are concerned with frequency hopping between frequencies of beams and uplink and downlink frequencies of a given satellite, the present embodiment is arranged to extend this concept to allow beams of a given satellite to hop through the frequencies associated with beams of further satellites.

As described above, in the present embodiment five satellites in each of two mutually orthogonal intermediate circular orbits are used, as shown in Figure 5.

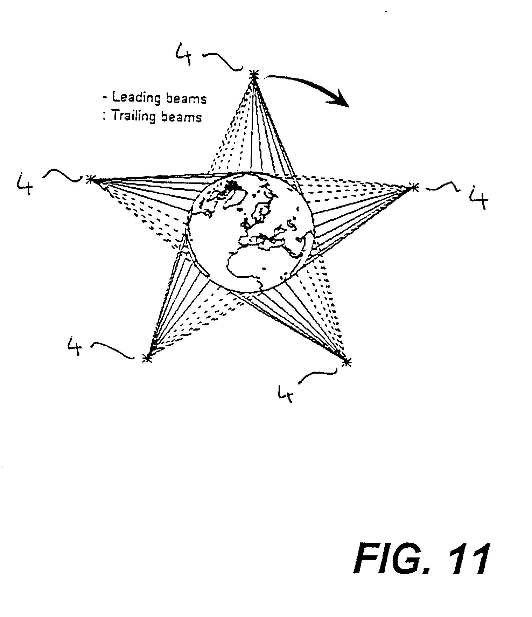

Referring to Figure 11, the satellites in one orbital plane are illustrated. In order to achieve communications coverage without gaps between the beams of the respective satellites, it is necessary to use non-interfering uplink and downlink frequencies where the beams of different satellites overlap. It can be seen that as the satellites 4 of the orbital plane shown rotate with respect to the earth in the direction indicated by the arrow in the figure, the leading beams of each satellite 4 overlap the trailing beams of the next satellite 4 in the clockwise sense. Therefore, to avoid interference between satellites in areas of overlapping beam coverage the leading beams of each satellite are allocated a frequency range which is distinct to that allocated to the trailing beams.

It will be appreciated by the skilled reader, that in order to preserve the four frequency beam re-use pattern, whilst allocating different frequency ranges to the leading and trailing beams, eight distinct downlink frequencies are required for the satellites in this orbit.

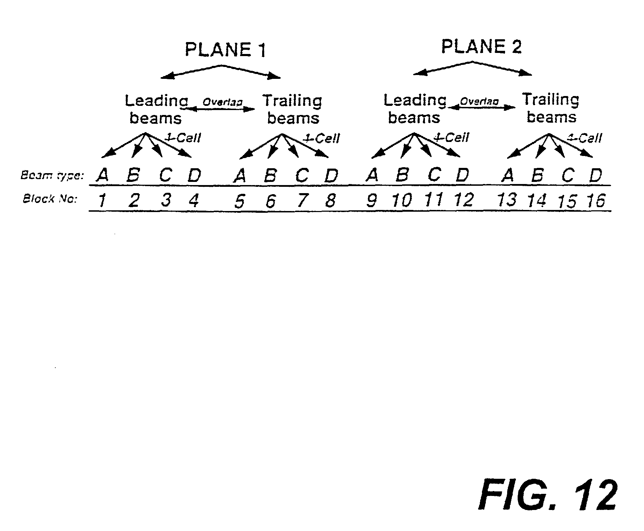

Furthermore, in order to provide a similar frequency distribution for the satellites in the second orbit, whilst avoiding interfering with those frequencies utilised by the satellites in the first orbit, a further eight distinct downlink frequencies are required for the satellites in this orbit. This frequency allocation is illustrated in Figure 12.

### Mode of Operation

In addition to the frequency hopping programs described in the previous embodiments, in this embodiment the trailing and leading beam groups of each satellite are arranged to hop cyclically, as a unit, through the four frequencies block groups (1-4, 5-8, 9-12 and 13-16 indicated in Figure 12).

It will be appreciated that in this embodiment, this gives rise to four distinct frequency hops, using the frequency block groups allocated to the leading and trailing beam frequency re-use patterns of the satellites of both orbit planes. Since each satellite comprises the same hexagonal beam configuration and has the same number of beams, the beam frequency reuse pattern for the leading beams of one satellite may be simply interchanged for the trailing beam frequency reuse pattern of the same satellite or either the leading or trailing beam frequency reuse pattern of the satellite in the other orbit.

Thus, the benefits of frequency diversity, as discussed with reference to the first embodiment, may be increased over and above those realisable through the first embodiment, through increasing the number of possible frequencies on which a transmission may be made. This is because by combining the four beam frequency reuse patterns available for each leading or trailing beam group with the four frequency block groups, sixteen distinct beam frequency patterns, or distinct hopping steps (each preserving the four frequency re-use system) may be used in a hopping sequence. This is in contrast to four as described in the first embodiment. Thus, each transmission will may be spread over a greater frequency band, and so derive greater benefit from frequency diversity as described above.

As discussed with reference to the previous embodiments, the hopping sequence of the present embodiment may be randomly generated or cyclical.

### OTHER EMBODIMENTS

It will be clear from the foregoing that the above described embodiments are each merely one way of putting the invention into effect. Many other alternatives will be apparent to the skilled person and are within the scope of the present invention.

The skilled reader will appreciate that the present invention may be applied to a system which has greater or fewer downlink frequencies per beam. Furthermore, the number of frequencies in the frequency re-use system may also be varied.

The skilled reader will also realise that the present embodiment may be implemented only where it is required. For example when the channels in question are being utilised, either to carry data or voice information.

The numbers of satellites and satellite orbits indicated are purely exemplary. Smaller numbers of geostationary satellites, or satellites in higher altitude orbits, could be used; or larger numbers of low Earth orbit (LEO) satellites could be used. Equally, different numbers of satellites in intermediate orbits could be used.

The skilled reader will realise that the present invention may be implemented using details of locations and types of emitters of electromagnetic radiation referenced by the World Administrative Radio Conference (WARC) and national regulatory bodies in order to design adaptive frequency hopping sequences to avoid interferers. Such information may also be determined using an interference mapping technique such as disclosed in EP 858176A.

Although TDMA has been mentioned as suitable access protocol, the present invention is fully applicable to other access protocols, such as code division multiple access (CDMA) or frequency division multiple access (FDMA).

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. A satellite communications system comprising at least one satellite (4) in orbit about the Earth, the at least one satellite (4) having a plurality of beam forming elements arranged to project a plurality of beams onto the surface of the Earth, the beam forming elements associated with each beam being arranged to receive a user uplink signal from one or more user terminals (2) adjacent the Earth in one of a set of distinct frequency ranges, the system further comprising means for transmitting frequency hopping data to one or more user terminals, the uplink signal of the one or more user terminals (2) being arranged to frequency hop in dependence upon the received frequency hopping data, characterised in that the frequency hopping data comprises a varying sequence of frequency ranges of the set of distinct frequency ranges.

2. The system of claim 1, wherein the beam forming elements associated with each beam are arranged to receive simultaneously a plurality of user uplink signals on separate sub-frequencies of the one of the set of distinct frequency ranges.

3. The system of claim 2, wherein the uplink signal of the one or more user terminals (2) is further arranged to frequency hop between corresponding sub-frequencies of a frequency range of the varying sequence.

4. The system of claim 3, wherein the frequency hopping between corresponding sub-frequencies is arranged to occur is synchronism with the hopping between ranges of the set of distinct frequency ranges.

5. The system of claim 3, wherein the frequency hopping between corresponding sub-frequencies is arranged to occur at a different rate or out of phase with the hopping between ranges of the set of distinct frequency ranges.

6. The system of any one of claims 3 to 5, wherein the uplink signal of the one or more user terminals (2) is arranged to frequency hop between corresponding sub-frequencies in a random manner.

7. The system of any one of claims 3 to 5, wherein the uplink signal of the one or more user terminals (2) is arranged to frequency hop between corresponding sub-frequencies in a predetermined manner.

8. The system of any preceding claim, wherein the varying sequence of frequency ranges is predetermined.

9. The system of any one of claims 1 to 7, wherein the varying sequence of frequency ranges is randomly generated.

10. The system of any preceding claim, in which the plurality of beam forming elements are provided on a single satellite.

11. The system of any preceding claim, in which the plurality of beam forming elements are provided on two or more satellites.

12. The system of claim 11, in which the two or more satellites (4a, 4b) are arranged in substantially different orbits about the Earth.

13. The system of claim 11, in which said two or more satellites (4a, 4b) are arranged in substantially the same orbit about the Earth.

14. The system of any preceding claim, further comprising interference mitigation means having a memory arranged to store data relating to interference sources, comprising frequency data and position data representing the position on the Earth from which it originated, the system being arranged to adapt the hopping sequence of the uplink signal by excluding a sub-frequency or a frequency range from the sequence in dependence upon the interference source data.

15. The system of claim 3, or any one of claims 4 to 14 dependent thereon, further comprising interference mitigation means arranged to measure the uplink signal-to-noise ratio on a sub-frequency and to adapt the hopping sequence of the uplink signal by excluding the sub-frequency from the sequence in dependence upon the uplink signal-to-noise ratio measurement.

16. The system of any preceding claim, in which the beam forming elements associated with each beam are arranged to transmit a downlink signal to one or more user terminals (2), the downlink signal being arranged to frequency hop in a manner corresponding to the uplink signal.

17. The system of any preceding claim, in which said one or more satellites form part of a non-geostationary global coverage constellation.
